# EUROPÄISCHE PATENTSCHRIFT

(11) **EP 3 601 118 B1**
(45) Veröffentlichungstag und Bekanntmachung des Hinweises auf die Patenterteilung: **05.04.2023**
(21) Anmeldenummer: 18713154.5
(22) Anmeldetag: 14.03.2018
(51) Int. Cl.: B65G 65/00, B23P 21/00, G05D 1/02

(54) **PRODUKTIONSSYSTEM MIT FTF ZUM AUTOMATISCH ABGEBEN VON BEHÄLTERN AN ENTNAHMEREGALEN**
PRODUCTION SYSTEM WITH AN AGV FOR AUTOMATICALLY DISCHARGING CONTAINERS TO PICKING SHELVES
SYSTÈME DE PRODUCTION ÉQUIPÉ D'UN FTF SERVANT À AUTOMATISER LA DISTRIBUTION DE CONTENANTS SUR DES RAYONNAGES DE PRÉLÈVEMENT

(30) Priorität: 20.03.2017 DE 102017105950
(43) Veröffentlichungstag der Anmeldung: 05.02.2020
(73) Patentinhaber: Identytec GmbH & Co. KG, 31135 Hildesheim (DE)
(72) Erfinder: FINKE, Thorsten, 31191 Algermissen (DE)
(74) Vertreter: Gramm, Lins & Partner Patent- und Rechtsanwälte PartGmbB
(86) Internationale Anmeldenummer: PCT/EP2018/056443
(87) Internationale Veröffentlichungsnummer: WO 2018/172165

(56) Entgegenhaltungen:
- EP-A2- 2 745 982
- WO-A1-2016/107844
- IT-A1- UB20 152 387

## Beschreibung

Die Erfindung betrifft ein Produktionssystem für die Serienproduktion insbesondere von Kraftfahrzeugen.

Die In der Serienproduktion von Kraftfahrzeugen verwendeten Bauteile werden häufig in A-, B- und C-Teile klassifiziert, wobei es sich bei den C-Teilen um Schüttgut ohne besonderen Wert handelt. Insbesondere C-Teile, bei denen es sich beispielsweise um Schrauben, Muttern oder dergleichen handeln kann, werden in Materialbehältern bereitgestellt, die nachfolgend auch kurz als Behälter bezeichnet werden. Die Behälter enthalten dabei in der Regel jeweils eine große Anzahl gleichartiger Bauteile.

Die bekannten Produktionssysteme weisen einen Behälter-Lagerbereich zur Lagerung der Behälter auf, die für die Produktion bestimmte Bauteile enthalten. Daneben weisen die bekannten Produktionssysteme entfernt von dem Behälter-Lagerbereich angeordnete Entnahmeregale auf, aus denen Behälter von Werkern entnehmbar sind. Die Entnahmeregale weisen häufig als schiefe Ebene ausgebildete Ablaufbahnen auf, wobei auf einer Ablaufbahn eine Mehrzahl von Behältern hintereinander angeordnet sind und üblicherweise Materialbehälter, die auf der selben Ablaufbahn angeordnet sind, die gleichen Bauteile enthalten. Während des Fertigungsprozesses werden zunächst die Bauteile aus einem in Ablaufrichtung vorderen Materialbehälter entnommen. Wenn dieser Materialbehälter vollständig entleert ist, kann er aus der Ablaufbahn entfernt werden, so dass dahinter angeordnete Materialbehälter nachrutschen. Alternativ hierzu ist es auch möglich, dass ein Werker einen noch gefüllten Materialbehälter aus der Ablaufbahn entnimmt, so dass wiederum dahinter angeordnete Behälter nachrutschen können.

Die Material-Bedarfsplanung erfolgt dabei an einer zentralen Einrichtung oder ggf. mehreren zentralen Einrichtungen. Ein Verfahren zum Melden von Materialvorräten an den einzelnen Entnahmeregalen besteht beispielsweise darin, dass jedem Entnahmeregal eine Karte zur Materialbedarfsplanung zugeordnet ist. Dabei wird in regelmäßigen Abständen an den einzelnen Entnahmeregalen durch einen Werker oder Logistiker geprüft, ob noch genügend Material zur Verfügung steht. Ist dies nicht der Fall, so entnimmt der Werker oder Logistiker die Karte, die dann zu einer zentralen Einrichtung gebracht wird, an der die Materialbedarfsplanung erfolgt. Im Rahmen der Materialbedarfsplanung kann dann eine Nachlieferung des entsprechenden Materials an die jeweilige Stelle erfolgen.

Um das Melden von Materialvorräten an die zentrale Einrichtung zu vereinfachen, ist es bekannt, einen sogenannten Abrufknopf zu verwenden. Dabei betätigt ein Werker bei Bedarf, also beispielsweise dann, wenn der vorletzte Materialbehälter aus einer Ablaufbahn entnommen wird, den Abrufknopf, so dass an der zentralen Einrichtung eine Materialanforderung ausgelöst wird, in deren Folge dann das zur Neige gehende Material zu dem jeweiligen Entnahmeregal geliefert werden kann. Durch den Abrufknopf ist also das Melden eines Materialbedarfes an die zentrale Einrichtung automatisiert.

Um die Bedarfsplanung weiter zu automatisieren, ist es aus der DE 20 2007 01 2926 U1 bekannt, durch Sensormittel abzufühlen, ob sich an einer vorbestimmten Stelle des Entnahmeregales ein Behälter befindet. Beispielsweise und insbesondere können die Sensormittel die Position wenigstens eines Materialbehälters auf der Ablaufbahn eines Entnahmeregales abfühlen. Dabei können die jeweiligen Sensormittel beispielsweise per Funk mit einer zentralen Einrichtung verbunden sein und damit einen entsprechenden Materialbedarf automatisch an die zentrale Einrichtung melden. Auf diese Weise ist die Anforderung von Materialbehältern automatisierbar, so dass sie besonders zuverlässig gestaltet ist. Da die Anforderung von Materialbehältern nicht mehr durch die Werker erfolgen muss, sind die Werker bei ihrer Arbeit entlastet.

Die bekannten Produktionssysteme weisen ferner Transportmittel zum Transport von Behältern von dem Behälter-Lagerbereich zu den Entnahmeregalen auf. Der Transport erfolgt üblicherweise so, dass ein Transportfahrzeug an einem Kommissionierplatz, der auch als "Bahnhof" oder "Supermarkt" bezeichnet wird, mit gefüllten Behältern beladen wird. Nach der Beladung fährt ein Fahrer das Transportfahrzeug zu derjenigen Stelle, an der ein Materialbedarf besteht und an der ein auf dem Transportfahrzeug mitgeführter Materialbehälter in das Entnahmeregal einzusetzen ist. Das Einsetzen des Materialbehälters in das Entnahmeregal führt dabei der Logistiker aus, wobei er gleichzeitig an den Entnahmeregalen die bereitgestellte Leerbehälter mitnimmt. Nach dem Abliefern sämtlicher Behälter fährt der Logistiker das Transportfahrzeug zurück zu dem Kommissionierplatz, so dass das Transportfahrzeug erneut mit gefüllten Materialbehältern beladen werden kann und sich der Vorgang wiederholt.

Durch EP 2 745 982 A2 ist ein Produktionssystem mit den Merkmalen des Oberbegriffs des Anspruchs 1 für die Serienproduktion insbesondere von Kraftfahrzeugen bekannt, das einen Behälter-Lagerbereich zur Lagerung von Behältern, die für die Produktion bestimmte Bauteile enthalten, und eine Mehrzahl von entfernt von dem Behälter-Lagerbereich angeordneten Entnahmeregalen aufweist, aus denen Bauteile aus Behältern von Werkern entnehmbar sind. Das bekannte Produktionssystem weist ferner Transportmittel zum Transport von Behältern aus dem Behälter-Lagerbereich zu dem Entnahmeregal auf, wobei die Transportmittel wenigstens ein fahrerloses Transportfahrzeug (FTF) aufweisen, das derart ausgebildet und eingerichtet ist, das Behälter in eine Förderrichtung (Abgaberichtung) automatisch an Entnahmeregale abgebbar sind oder abgegeben werden.

Das aus der Druckschrift bekannte Produktionssystem löst die vollständige logistische Aufgabe, Material vollautomatisch entsprechend dem jeweiligen Bedarf aus einem Lagerbereich des Produktionssystems zu Entnahmeregalen zu transportieren.

Durch WO 2016/1078441 A1 ist ein System zur Handhabung von Gepäck oder Fracht bekannt, das für eine Verwendung an Flughäfen vorgesehen ist.

Der Erfindung liegt die Aufgabe zugrunde, ein Produktionssystem der im Oberbegriff des Anspruchs 1 genannten Art anzugeben, bei die Störanfälligkeit weiter verringert ist .

Diese Aufgabe wird durch die im Anspruch 1 angegebene Erfindung gelöst.

Die Erfindung sieht vor, dass das Transportregal einen mit dem Fahrgestell des FTF verbundenen oder verbindbaren Grundkörper aufweist, an dem ein Träger für zu transportierende Behälter abgeordnet, wobei der Träger relativ zu dem Grundkörper quer zur Abgaberichtung parallel zu einer im wesentlichen horizontalen Ebene verstellbar angeordnet ist, wobei Mittel zum Verstellen des Trägers relativ zu dem Fahrgestell vorgesehen sind, die derart ausgebildet sind, dass bei vor einem Entnahmeregal ortsfest angeordnetem FTF die Position des Trägers relativ zu dem Entnahmeregal quer zur Abgaberichtung parallel zu einer im wesentlichen horizontalen Ebene verstellbar ist. Die Abgaberichtung ist dabei durch eine Trajektorie definiert, entlang derer sich ein Behälter bei der Abgabe von dem Transportregal an das Entnahmeregal bewegt.

Um einen Behälter von dem an dem FTF angeordneten Transportregal an ein Entnahmeregal abzugeben, wird das FTF in eine Position vor dem Entnahmeregal verfahren, die hinsichtlich der seitlichen Ausrichtung des FTF zu dem Entnahmeregal idealerweise einer Soll-Position relativ zu dem Entnahmeregal entspricht. In der Soll-Position des FTF und damit des Trägers ist eine Abgabebahn des Trägers fluchtend oder annähernd fluchtend zu einer Aufnahmebahn an dem Entnahmeregal ausgerichtet. Die Abgabebahn ist durch einen an den Träger gebildeten Abgabeschacht und die Aufnahmebahn durch einen an dem Entnahmeregal gebildeten Lagerschacht definiert.

In der Praxis ist jeder Abgabeschacht bzw. Lagerschacht jeweils durch zwei seitlich zueinander beabstandete Schienen gebildet, an oder auf denen die Behälter führbar sind oder geführt werden.

Der Erfindung liegt die Erkenntnis zugrunde, dass Funktionsstörungen des Produktionssystems bei der Abgabe von Behältern von dem FTF an ein Entnahmeregal auftreten können, wenn die Schienen des Abgabeschachts quer zur Abgaberichtung, also seitlich, nicht mit der erforderlichen Genauigkeit zu den Schienen des Lagerschachts ausgerichtet sind.

Hiervon ausgehend liegt der Erfindung der Gedanke zugrunde, dadurch die Funktionssicherheit des erfindungsgemäßen Produktionssystems weiter zu erhöhen und seine Störanfälligkeit weiter zu verringern, dass bei vor einem Entnahmeregal ortsfest angeordnetem FTF die Möglichkeit einer Feinjustierung bzw. -einstellung der Position des Trägers quer zur Abgaberichtung parallel zu einer im wesentlichen horizontalen Ebene, also einer seitlichen Feinjustierung bzw. -einstellung, geschaffen wird.

Hierzu sieht die Erfindung vor, dass das Transportregal zweiteilig ausgebildet ist und einen Grundkörper und einen Träger aufweist, der quer zur Abgaberichtung parallel zu einer im wesentlichen horizontalen Ebene verstellbar an dem Grundkörper angeordnet ist und Mittel zum Verstellen des Trägers relativ zu dem Grundkörper vorgesehen sind.

Bei einem erfindungsgemäßen Produktionssystem verfährt das FTF in Richtung auf das jeweilige Entnahmeregal und hält vor diesem an. Der Fahrantrieb des FTF wird dabei so angesteuert, dass die nach Beendigung der Fahrbewegung vor dem Entnahmeregal erreichte Ist-Position des FTF möglichst genau einer Soll-Position entspricht, in der der Abgabeschacht des an dem FTF angeordneten Transportregales mit der erforderlichen Genauigkeit fluchtend zu dem zugeordneten Lagerschacht des Entnahmeregals angeordnet ist, der Abgabeschacht also seitlich zu dem Lagerschacht ausgerichtet ist.

Falls die Ist-Position mit einer für eine störungsfreie Abgabe eines Behälters aus dem Transportregal an das Entnahmeregal ausreichenden Genauigkeit der Soll-Position entspricht, kann daran anschließend un mittelbar der Behälter an das Entnahmeregal abgegeben werden.

Falls demgegenüber die Ist-Position nicht mit der erforderlichen Genauigkeit der Soll-Position entspricht, so wird der Träger erfindungsgemäß relativ zu dem Fahrgestell quer zur Abgaberichtung parallel zu einer im wesentlichen horizontalen Ebene, also seitlich, soweit verstellt, bis die Ist-Position des Trägers mit der erforderlichen Genauigkeit der Soll-Position entspricht.

Mit anderen Worten findet zunächst mittels des Fahrantriebs des FTF eine seitliche Grobpositionierung des Trägers relativ zu dem Entnahmeregal statt. Daran anschließend kann, soweit erforderlich, durch Verstellung des Trägers relativ zu dem Fahrgestell bei stillstehendem FTF eine seitliche Feinpositionierung des Trägers ausgeführt werden.

Auf diese Weise ist zuverlässig verhindert, dass eine Fehlpositionierung des Trägers relativ zu dem Entnahmeregal zu einer Funktionsstörung des Produktionssystems führt. Dadurch ist die Funktionssicherheit des erfindungsgemäßen Produktionssystems weiter erhört und seine Anfälligkeit gegenüber Störungen reduziert.

Die Feinpositionierung des Trägers durch Verstellen desselben relativ zu dem Träger des an dem FTF angeordneten Transportregales kann schnell und mit hoher Präzision erfolgen.

Aufgrund der Verstellbarkeit des Trägers relativ zu dem Grundkörper des Transportregales ermöglicht die Erfindung eine störungsfreie Abgabe von Behältern von dem FTF an ein Entnahmeregal auch dann, wenn eine hinreichend präzise Positionierung des Transportregales vor dem Entnahmeregal durch entsprechende Steuerung des Fahrantriebs des FTF nicht gewährleistet werden kann. Dies kann beispielsweise dann der Fall sein, wenn das für das FTF angewendete Navigationsverfahren prinzipbedingt eine hinreichend genaue Feinpositionierung nicht ermöglicht. Die Erfindung ermöglicht eine störungsfreie Abgabe von Behältern von dem FTF an Entnahmeregale auch dann, wenn ausnahmsweise auftretende außergewöhnliche Betriebszustände des FTF eine hinreichend genaue Positionierung verhindern.

Eine vorteilhafte Weiterbildung der Erfindung sieht vor, dass die Mittel zum Verstellen des Trägers derart ausgebildet sind, dass sie den Träger bei vor dem Entnahmeregal ortsfest angeordnetem FTF relativ zu dem Entnahmeregal ausgehend von einer Ist-Position in eine Soll-Position verstellen.

Eine andere vorteilhafte Weiterbildung der Erfindung sieht vor, dass in der Soll-Position des Trägers eine Abgabebahn des Trägers fluchtend oder annähernd fluchtend zu einer Aufnahmebahn an dem Entnahmeregal ausgerichtet ist. Unter einem annähernden Fluchten wird im Sinne der Erfindung verstanden, dass die Abgabebahn und die Aufnahmebahn in einem Maße zueinander ausgerichtet sind, dass verbleibende Fehlausrichtungen die Abgabe eines Behälters von dem FTF an das Entnahmeregal nicht behindern.

Eine andere vorteilhafte Weiterbildung sieht vor, dass die Abgabebahn durch einen an dem Träger des Transportregales gebildeten Abgabeschacht und die Aufnahmebahn durch einen an dem Entnahmeregal gebildeten Lagerschacht definiert ist.

Gemäß einer anderen vorteilhaften Weiterbildung der Erfindung ist jeder Abgabeschacht bzw. Aufnahmeschacht jeweils durch zwei seitlich zueinander beabstandete Schienen definiert, an oder auf denen die Behälter führbar sind oder geführt werden.

Die Verstellung des Trägers relativ zu dem Grundkörper des Transportregales kann auf beliebige geeignete Weise erfolgen. Um eine besonders genaue Positionierung des Trägers relativ zu dem Fahrgestell zu ermöglichen, sieht eine vorteilhafte Weiterbildung der Erfindung vor, dass dem Träger zum Verstellen desselben relativ zu dem Fahrgestell Antriebsmittel zugeordnet sind, wobei Steuerungsmittel zur Ansteuerung der Antriebsmittel vorgesehen sind.

Im Sinne einer Automatisierung der Abläufe bei der Positionierung des Trägers relativ zu einem Entnahmeregal sieht eine andere vorteilhafte Weiterbildung der Erfindung vor, dass die Steuerungsmittel für eine automatische Ansteuerung des Antriebsmittel derart ausgebildet und eingerichtet sind, dass bei vor einem Entnahmeregal ortsfest angeordneten FTF der Träger relativ zu dem Entnahmeregal ausgehend von einer Ist-Position in eine Soll-Position oder verstellt wird.

Die Antriebsmittel können bei der vorgenannten Ausführungsform in beliebiger geeigneter Weise ausgebildet sein. Nachdem an dem FTF ohnehin elektrische Energie zur Verfügung steht, beispielsweise zur Speisung des Fahrantriebs und der Steuerung des FTF, sieht eine vorteilhafte Weiterbildung der Erfindung insoweit vor, dass die Antriebsmittel wenigstens einen elektromotorischen Antrieb aufweisen.

Eine vorteilhafte Weiterbildung der vorgenannten Ausführungsform sieht vor, dass der Antrieb einen Spindeltrieb aufweist, der mit einem Elektromotor in Drehantriebsverbindung steht. Entsprechende Spindeltriebe stehen als robuste und relativ kostengünstige Standardbaugruppen zur Verfügung und ermöglichen eine exakte (Fein-)Positionierung des Trägers.

Eine andere vorteilhafte Weiterbildung der Erfindung sieht Mittel zur Feststellung der Ist-Position des FTF relativ zu dem Entnahmeregal vor, die mit den Steuerungsmitteln der Antriebsmittel in Datenübertragungsverbindung stehen. Bei dieser Ausführungsform wird die Ist-Position des FTF und damit des Trägers relativ zu dem Entnahmeregal festgestellt und zu den Steuerungsmitteln übermittelt, die daraufhin die Antriebsmittel für den Träger so ansteuern, dass dieser in die Soll-Position bewegt wird.

Eine vorteilhafte Weiterbildung der vorgenannten Ausführungsform sieht vor, dass die Mittel zur Feststellung der Ist-Position des FTF Sensormittel zur Abtastung wenigstens eines Merkmals an dem Entnahmeregal aufweisen. Bei dieser Ausführungsform wird die Ist-Position des FTF durch Abtastung eines Merkmals an dem Entnahmeregal ermittelt.

Bei der vorgenannten Ausführungsform können die Sensormittel entsprechend einem beliebigen geeigneten Funktionsprinzip arbeiten. Eine vorteilhafte Weiterbildung der Erfindung sieht insoweit vor, dass die Sensormittel optische Sensormittel aufweisen. Entsprechende optische Sensormittel stehen in vielfältigen Ausführungsformen zur Verfügung und ermöglichen eine exakte Ermittlung der Ist-Position des FTF.

Eine vorteilhafte Weiterbildung der vorgenannten Ausführungsform sieht vor, dass die optischen Sensormittel wenigstens eine Kamera aufweisen. Entsprechende Kameras stehen in Form von Digitalkameras als relativ einfache und kostengünstige Baugruppen zur Verfügung und können beispielsweise verwendet werden, um während der Bewegung des FTF relativ zu dem Entnahmeregal Bewegt- oder Standbilder des Entnahmeregals aufzunehmen und durch Verfahren der Bildverarbeitung und Mustererkennung anhand der aufgenommenen Bewegt- oder Standbilder die Ist-Position des FTF relativ zu dem Entnahmeregal festzustellen.

Eine andere vorteilhafte Weiterbildung der Erfindung sieht vor, dass die optischen Sensormittel wenigstens einen Laser aufweisen, der zur Abtastung eines optischen Merkmals an dem Entnahmeregal ausgebildet ist. Entsprechende Laser stehen als relativ kostengünstige Standardbaugruppen mit hoher Funktionssicherheit zur Verfügung. Der Laser kann dabei beispielsweise an den Entnahmeregalen angebrachte Positionsmarken abtasten. Es ist jedoch auch möglich, dass der Laser zur Positionsermittlung beispielsweise eine Schiene eines Lagerschachtes an einem Entnahmeregal abtastet.

Eine vorteilhafte Weiterbildung der Erfindung, sieht vor, dass die Fahrsteuerung des FTF derart programmiert ist, dass die Fahrtrichtung des FTF quer zur Abgaberichtung verläuft, derart, dass sich das FTF bei der Annäherung an das jeweilige Entnahmeregal bezogen auf die Abgaberichtung in Querfahrt bewegt. Auf diese Weise ist die Positionierung des FTF relativ zu dem Regal erleichtert und das Risiko einer Kollision des FTF mit dem Entnahmeregal verringert, das bestehen würde, wenn das FTF frontal auf das Entnahmeregal zufahren würde.

Eine vorteilhafte Weiterbildung der vorgenannten Ausführungsform sieht vor, dass die Sensormittel zur Erfassung wenigstens eines die Soll-Position kennzeichnenden Merkmals an dem Entnahmeregal während der Querfahrt ausgebildet und programmiert sind.

Eine andere Weiterbildung der Erfindung sieht vor, dass die Mittel zur Feststellung der Ist-Position des FTF relativ zu dem Entnahmeregal mit der Fahrsteuerung des FTF in Datenübertragungsverbindung stehen.

Die Erfindung wird nachfolgend anhand der beigefügten Zeichnung näher erläutert, in der schematisch und teilweise skizzenartig ein Ausführungsbeispiel eines erfindungsgemäßen Produktionssystems dargestellt ist.

Es zeigt:
- FIG. 1: stark schematisiert und skizzenartig eine Topologie eines erfindungsgemäßen Produktionssystems 2.
- FIG. 2: schematisiert eine Ansicht von hinten auf ein Ausführungsbeispiel eines FTF, das nicht Teil der Erfindung ist,
- FIG. 3: das FTF gemäß Figur 2 in einer Seitenansicht,
- FIG. 4: in einer Ansicht von vorne ein Sperrelement eines FTF in seiner Sperrposition,
- FIG. 5: in gleicher Darstellung wie Figur 4 das Sperrelement in seiner Abgabeposition,
- FIG. 6: in gleicher Darstellung wie Figur 2 ein Ausführungsbeispiel eines Entnahmeregales des Produktionssystems gemäß Figur 2 und
- FIG. 7: eine Seitenansicht des Entnahmeregales gemäß Figur 6,
- Fig. 8: in gleicher Darstellung wie Fig. 2 ein weiteres Ausführungsbeispiel eines FTF eines erfindungsgemäßen Produktionssystems,
- Fig. 9: eine Perspektivansicht des FTF gemäß Fig. 8,
- Fig. 10: eine Seitenansicht des FTF gemäß Fig. 9 und
- Fig. 11: in gegenüber Fig. 10 vergrößertem Maßstab eine Einzelheit des FTF gemäß Fig. 9 und Fig. 10 im Bereich einer Verbindung des Grundkörpers eines Transportregales mit dem Träger,
- Fig. 12: eine zu Fig. 11 ähnliche Darstellung, wobei aus Gründen der Veranschaulichung eine Verkleidung des Grundkörpers weggelassen ist,
- Fig. 13: eine zu Fig. 11 ähnliche Darstellung, wobei aus Gründen der Veranschaulichung weitere Bestandteile des Transportregales weggelassen sind und
- Fig. 14: eine Perspektivansicht einer Einzelheit aus Fig. 11.

Die Zeichnung ist teilweise stark schematisiert und skizzenartig ausgeführt und auf die für das Verständnis für die Erfindung wesentlichen Elemente erheblich detailreduziert.

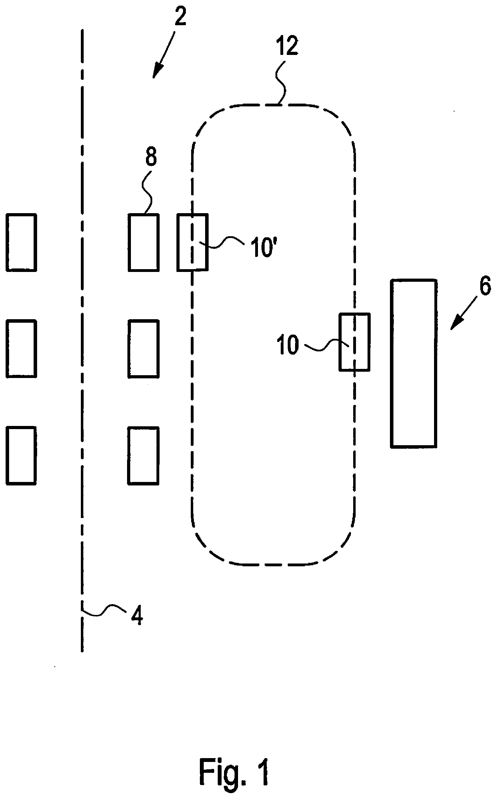

In Figur 1 ist stark schematisiert ein Produktionssystem 2 für die Serienproduktion insbesondere von Kraftfahrzeugen dargestellt, das ein in Figur 1 durch eine strichpunktierte Linie 4 symbolisiertes Fließband aufweist.

In der Serienproduktion von Kraftfahrzeugen werden sogenannte A-, B-, und C-Teile verwendet, wobei es sich bei C-Teilen um Schüttgut ohne besonderen Wert handelt. Insbesondere derartige C-Teile werden in Materialbehältern, die nachfolgend auch kurz als Behälter bezeichnet werden, angeliefert. Das Produktionssystem 2 weist einen Behälter-Lagerbereich 6 zur Lagerung von Behältern auf, die für die Produktion bestimmte Bauteile enthalten. Entfernt von dem Behälter-Lagerbereich 6 sind beiderseits des Fließbandes 4 Entnahmeregale angeordnet, aus dem Werker Behälter mit Bauteilen entnehmen können. In Figur 1 ist lediglich ein Entnahmeregal exemplarisch mit dem Bezugszeichen 8 versehen.

Eine wesentliche logistische Aufgabe besteht darin, in dem Produktionssystem 2 dafür zu sorgen, dass an den Entnahmeregalen 8 stets eine ausreichende Anzahl von Behältern mit für die Produktion benötigten Bauteilen zur Verfügung steht. Eine logistische Teilaufgabe besteht darin, mit Bauteilen gefüllte Behälter von dem Behälter-Lagerbereich 6 zu den Entnahmeregalen 8 zu transportieren und dabei entsprechend dem Bedarf an Bauteilen an den einzelnen Entnahme-Regalen 8 die entsprechenden Behälter zu liefern. Zum Transport von Behältern von dem Behälter-Lagerbereich 6 zu den Entnahmeregalen 8 sind Transportmittel vorgesehen, die erfindungsgemäß im Rahmen eines fahrerlosen Transportsystemes (FTS) wenigstens ein fahrerloses Transportfahrzeug (FTF) aufweisen. In Figur 1 ist rein symbolisch ein einzelnes FTF angedeutet und mit dem Bezugszeichen 10 versehen. Entsprechend den jeweiligen Anforderungen kann in dem Produktionssystem 2 jedoch eine Vielzahl von FTF vorgesehen sein.

Erfindungsgemäß ist wenigstens ein FTF 10 derart eingerichtet und ausgebildet, dass Behälter automatisch an die Entnahmeregale 8 abgebbar sind oder abgegeben werden.

Das FTF 8 wird von einer zentralen Einrichtung, beispielsweise einem zentralen Leitrechner, durch den alle logistischen Vorgänge innerhalb des Produktionssystemes koordiniert werden, per Funk angesteuert, wobei die Funkverbindung bei dem dargestellten Ausführungsbeispiel über ein WLAN hergestellt ist.

Das FTF 10 ist in dem Behälter-Lagerbereich 6 in eine Beladeposition steuerbar, die in Figur 1 gezeigt ist und in der das FTF 10 mit gefüllten Behältern beladen wird. Die Beladung des FTF 10 mit gefüllten Behältern kann manuell durch einen Logistiker erfolgen. Diese Ausführungsform hat den Vorteil, dass der Behälter-Lagerbereich 6 nicht verändert werden muss, um die Erfindung zu benutzen. Vorzugsweise können jedoch in dem Beladebereich auch Mittel zur voll- oder teilautomatischen Beladung des FTF 10 mit gefüllten Behältern vorgesehen sein. Diese Mittel können vorzugsweise beispielsweise durch ein Handhabungsgerät oder auf andere Weise ausgebildet sein.

Um einen Bedarf an Bauteilen an einem der Entnahmeregale 8 zu melden, sind an wenigstens einem Entnahmeregal 8 Sensormittel vorgesehen, die abfühlen, ob sich an einer vorbestimmten Stelle des Entnahmeregales ein Behälter befindet. Die Sensormittel können beispielsweise einen optischen Sensor oder wenigstens einen elektromechanisch arbeitenden Sensor aufweisen, wie er beispielsweise aus der DE 20 2007 012926 U1 bekannt ist.

An den einzelnen Entnahmeregalen 8 ist jeweils eine Ablaufbahn gebildet, die insbesondere als Rollenbahn und als schiefe Ebene ausgebildet sein kann und auf der Behälter ablaufen, in denen die für die Serienfertigung benötigten Bauteile aufgenommen sind. Hierbei enthalten Behälter, die auf derselben Ablaufbahn angeordnet und damit in demselben Entnahmeregal angeordnet sind, in der Regel die gleichen Bauteile.

Hinsichtlich eines Ausführungsbeispieles eines elektromechanisch arbeitenden Sensors der Sensormittel wird wiederum auf die DE 20 2007 012926 U1 verwiesen, in der gezeigt und beschrieben ist, dass ein Fühler eines elektromechanisch arbeitenden Sensors in die Ablaufbahn hineinragt, um abzufühlen, ob sich an der Stelle, an der sich der Sensor befindet, aktuell ein Materialbehälter befindet. Es ist jedoch auch möglich, dass ein Werker einen leeren Materialbehälter an einer dafür vorgesehenen Ablagefläche abstellt und dass durch entsprechende Sensormittel festgestellt wird, ob sich an dieser Ablagefläche aktuell ein Behälter befindet und dementsprechend ein Bedarf für eine Nachlieferung von Bauteilen besteht.

Die Sensormittel können vorzugsweise ein Bedarfsmeldesignal erzeugen, wenn sich an der vorbestimmten Stelle, also beispielsweise an dem Entnahmeregal, kein Behälter befindet. Dabei wird das Bedarfsmeldesignal per Funk zu der zentralen Einrichtung zur Materialbedarfsplanung übertragen. An der zentralen Einrichtung läuft damit eine Vielzahl von Signalen zusammen, die einen Bedarf an unterschiedlichen Bauteilen an unterschiedlichen Stellen des Produktionsprozesses signalisieren.

In Figur 1 ist durch eine gestrichelte Linie 12 ein Fahrweg des FTF 10 symbolisiert, wobei dieser Fahrweg in einer Schleife von dem Behälter-Lagerbereich 6 zu den Entnahmeregalen 8 führt. Entsprechend den jeweiligen Anforderungen können beliebige Fahrwege vorgesehen sein. Die Art und Weise, wie ein FTF entlang eines vorbestimmten Fahrweges fährt und hierbei angesteuert wird, ist dem Fachmann allgemein bekannt und wird daher hier nicht näher erläutert.

Eine Transportfahrt des FTF 10 kann beispielsweise in Abhängigkeit von wenigstens einem Bedarfsmeldesignal der an den Entnahmeregalen 8 vorgesehenen Sensormittel ausgelöst werden. Die logistische Aufgabe, Material in Behältern so rechtzeitig zu den Entnahmeregalen zu transportieren, dass dort stets eine ausreichende Anzahl der benötigten Bauteile zur Verfügung steht, gleichzeitig jedoch Transportfahrten des FTF möglichst ökonomisch zu gestalten, indem beispielsweise während einer Transportfahrt unterschiedliche Entnahmeregale 8 angefahren und dort Behälter mit unterschiedlichen Materialien abgeliefert werden, wird durch eine entsprechende Steuerung in der zentralen Einrichtung gelöst.

Es ist vorzugsweise jedoch auch möglich, eine Transportfahrt des FTF 10 in Abhängigkeit von wenigstens einem Bedarfssteuerungssignal der zentralen Einrichtung zur Materialbedarfsplanung auszulösen. Hierbei kann beispielsweise der Materialbedarf an den einzelnen Stellen des Produktionsprozesses und damit an den einzelnen Entnahmeregalen 8 entsprechend dem Fortschritt des Produktionsprozesses geschätzt werden, wobei entsprechend der Schätzung - ggf. notfalls unter Zugrundelegen einer Sicherheitsreserve - Bauteile in entsprechenden Behältern zu den einzelnen Entnahmeregalen 8 geliefert werden.

Vorzugsweise kann eine Bedarfssteuerung dadurch angetriggert werden, dass ein Logistiker von Zeit zu Zeit an den einzelnen Entnahmeregalen prüft, ob noch eine ausreichende Anzahl von Bauteilen zur Verfügung steht. Ein Materialbedarf kann der zentralen Einrichtung dann durch geeignete technische Mittel mitgeteilt werden, beispielsweise über Materialbedarfskarten, die an den einzelnen Entnahmeregalen vorgesehen sind und zur Anzeige eines Materialbedarfs entnommen und an die zentrale Einrichtung übermittelt werden können.

Vorzugsweise können in einem Produktionssystem auch die zuvor beschriebenen Arten einer Bedarfsmeldung an die zentrale Einrichtung miteinander und ggf. auch noch mit weiteren Verfahren zur Bedarfsmeldung kombiniert werden.

Das FTF 10 wird in dem Beladebereich mit gefüllten Behältern beladen, wobei der Beladebereich beispielsweise und insbesondere in dem Behälter-Lagerbereich gebildet sein kann.

In dem Beladebereich werden gefüllte Behälter vor dem Beladen des FTF 10 gescannt, wobei zu diesem Zweck in dem Beladebereich Scannermittel zum Scannen der Behälter vorgesehen sind. Bei dem dargestellten Ausführungsbeispiel weisen die Scannermittel einen Scanner für eine optoelektronisch lesbare Schrift, und zwar einen Barcode, auf. Die gefüllten Behälter können zum Zwecke ihrer Erfassung vor dem Beladen des FTF jedoch auch auf andere Weise gescannt werden. Beispielsweise können die Scannermittel wenigstens eine Kamera aufweisen.

Im Rahmen eines Verfahrens kann somit beispielsweise an jedem Behälter ein Barcode angebracht sein. Der Barcode kann dabei dauerhaft an dem Behälter angebracht sein, wenn in diesem Behälter stets die gleichen Teile transportiert werden. Es ist jedoch auch möglich, in ein und demselben Behälter bei unterschiedlichen Transportfahrten des FTF unterschiedliche Bauteile zu transportieren. Dann wird an jedem Behälter entsprechend seinem Inhalt jeweils ein individueller Barcode angebracht. Mit dem Scannen ist der jeweilige Behälter erfasst und kann auf das FTF 10 geladen werden.

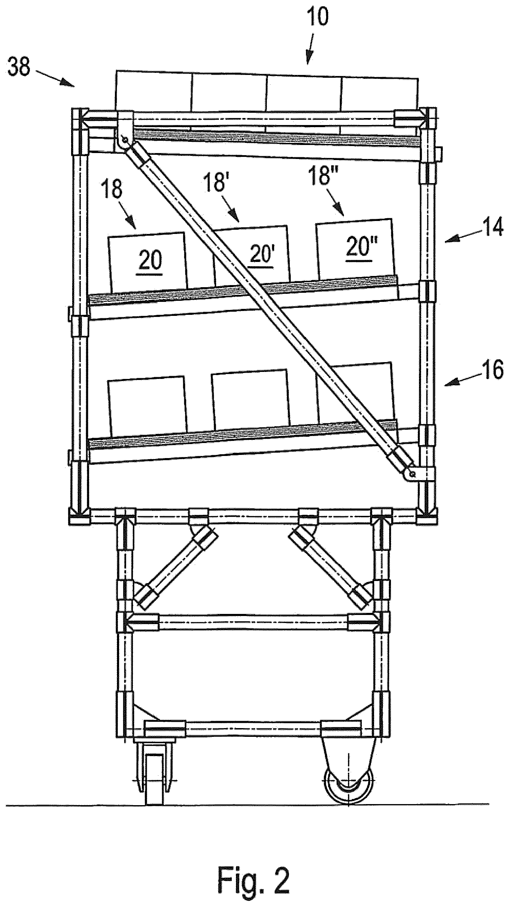

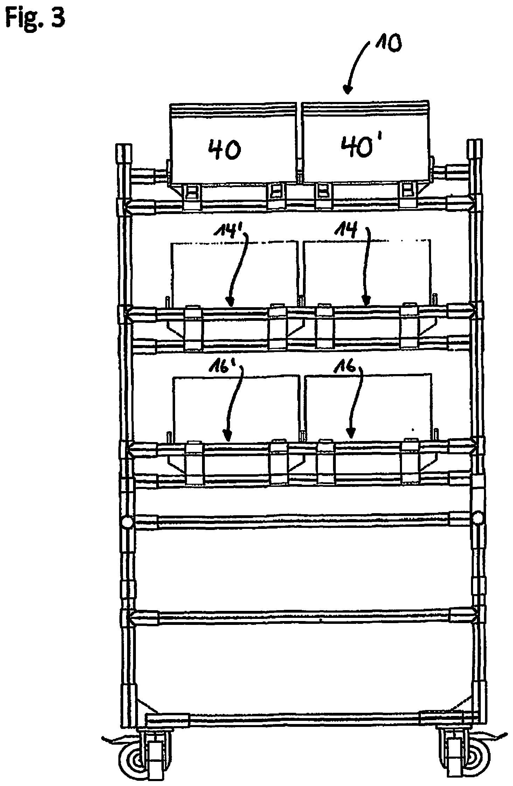

Anhand der Figuren 2 und 3 wird nachfolgend der Aufbau eines Ausführungsbeispieles eines FTF, der nicht Teil der Erfindung ist, näher erläutert.

Figur 2 zeigt eine Rückansicht des FTF 10. Erfindungsgemäß ist das FTF 10 derart eingerichtet und ausgebildet, dass Behälter automatisch an den Entnahmeregalen 8 abgegeben werden können.

Die zentrale Einrichtung steuert das FTF 10 nach erfolgter Beladung desselben derart an, dass das FTF 10 von der Beladeposition zu einer durch die zentrale Einrichtung vorgegebenen Abgabeposition fährt zur Abgabe von geladenen gefüllten Behältern an wenigstens ein Entnahmeregal 8.

Bei dem dargestellten Ausführungsbeispiel sind die Abgabemittel als passive Abgabemittel ausgebildet und werden von der zentralen Einrichtung angesteuert.

Die Abgabemittel an dem FTF 10 weisen wenigstens einen Abgabeschacht auf, an dem an wenigstens zwei Positionen hintereinander Behälter angeordnet werden können. Aus Figur 2 ist ersichtlich, dass bei dem dargestellten Ausführungsbeispiel zwei Abgabeschächte 14,16 übereinander angeordnet sind. Aus Figur 3 ist ersichtlich, dass neben dem Abgabeschacht 14 ein weiterer Abgabeschacht 14' und neben dem Abgabeschacht 16 ein weiterer Abgabeschacht 16' angeordnet sind. Nachfolgend wird ausschließlich der Abgabeschacht 14 näher beschrieben. Die Abgabeschächte 16 sowie 14' und 16' sind entsprechend aufgebaut und werden daher hier nicht näher erläutert.

Wie aus Figur 2 ersichtlich, ist der Abgabeschacht 14 als schiefe Ebene ausgebildet. Um eine Abgabe von Behältern aus dem Abgabeschacht 14 zu fördern, ist der Abgabeschacht 14 ferner als Rollenbahn ausgebildet.

Wie ferner aus Figur 2 ersichtlich ist, sind in dem Abgabeschacht 14 an drei Positionen 18,18',18" hintereinander Behälter 20,20',20'' angeordnet. Die Anzahl der Positionen 18,18'18'' pro Abgabeschacht 14 ist entsprechend dem jeweiligen Anforderungen innerhalb weiter Grenzen wählbar. Gleichermaßen ist die Anzahl von nebeneinander angeordneten Abgabeschächten 14,14' bzw. 16,16' und die Anzahl der übereinander angeordneten Abgabeschächten 14,16 bzw. 14',16' innerhalb weiter Grenzen wählbar. Letztendlich ist die Anzahl von Positionen 18, an denen das FTF 10 mit einem Behälter 20 beladen werden kann, ausschließlich von den Dimensionen des FTF 10 abhängig.

Vorzugsweise ist jedem Abgabeschacht 14 wenigstens ein Sperrelement zugeordnet, das aus einer Sperrposition, in der der Abgabeschacht 14 gegen eine Abgabe von Behältern gesperrt ist, und einer Abgabeposition beweglich ist, in der der Abgabeschacht für eine Abgabe von Behältern freigegeben ist.

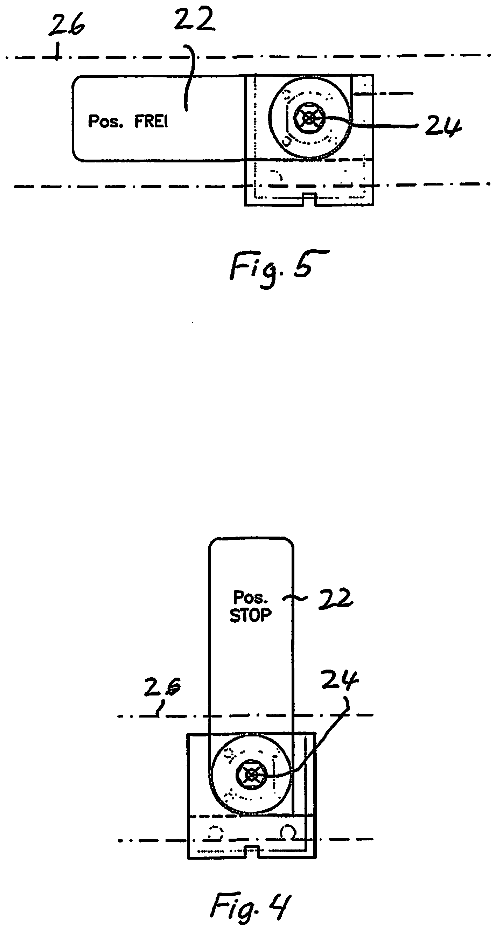

Ein Ausführungsbeispiel eines solchen Sperrelementes ist in den Figuren 4 und 5 dargestellt, wobei Figur 4 das Sperrelement in seiner Sperrposition und Figur 5 das Sperrelement in seiner Abgabeposition darstellt.

Das Sperrelement ist bei diesem Ausführungsbeispiel als Riegel 22 ausgebildet, der mittels eines elektromotorischen Drehantriebs um eine Schwenkachse 24 verschwenkbar ist. In der in Figur 4 dargestellten Sperrposition ragt der Riegel in den Abgabeschacht 14 hinein, so dass dieser gegen eine Abgabe von Behältern gesperrt ist. Um Behälter aus dem Abgabeschacht 14 abgeben zu können, wird der Riegel 22 mittels des zugeordneten elektromotorischen Drehantriebs in die in Figur 5 dargestellte Abgabeposition verschwenkt, in der der Abgabeschacht 14 für eine Abgabe der Behälter 20,20',20'' freigegeben ist. Die Ansteuerung des elektromotorischen Drehantriebs des Riegels 22 kann entsprechend den jeweiligen Anforderungen durch die zentrale Einrichtung oder durch eine an dem FTF 10 vorgesehene Steuerung gesteuert werden.

Falls der Abgabeschacht 14 "sortenrein", also ausschließlich mit Behältern, die die gleichen Bauteile enthalten, beladen wird, so ist es ausreichend, wenn dem Abgabeschacht 14 ein einzelnes Sperrelement 22 zugeordnet ist, das an dem in Abgaberichtung vorderen Ende des Abgabeschachtes 14, also an dem in Figur 2 linken Ende des Abgabeschachtes 14 angeordnet ist.

Um auch eine nicht "sortenreine" Beladung zu ermöglichen, bei der in dem Abgabeschacht 14 Behälter angeordnet werden, die unterschiedliche Bauteile enthalten, sind bei dem dargestellten Ausführungsbeispiels Vereinzelungsmittel zur einzelnen Abgabe von Behältern aus dem Abgabeschacht 14 zugeordnet. Die Vereinzelungsmittel sind dadurch gebildet, dass den einzelnen Positionen 18,18',18"des Abgabeschachtes 14 jeweils ein Sperrelement zugeordnet ist, wie es in den Figuren 4 und 5 dargestellt ist. Die den Positionen 18,18',18" zugeordneten Sperrelemente sind dabei unabhängig voneinander ansteuerbar.

Die Beladung eines FTF 10 vollzieht sich wie folgt:

Zur Beladung wird das FTF 10 in eine Beladeposition gesteuert, in der es beispielsweise vor dem Behälter-Lagerbereich 6 angeordnet ist. Ein Logistiker entnimmt aus dem Behälter-Lagerbereich 6 Behälter, die auf das FTF 10 geladen werden sollen. Zunächst wird dabei der an jedem Behälter vorgesehene Barcode gescannt. Um die Beladung zu erleichtern, sind in dem Beladebereich Anzeigemittel zur Visualisierung einer für den jeweiligen Behälter vorgesehenen Position an dem FTF 10 vorgesehen.

Bei dem dargestellten Ausführungsbeispiel weisen die Anzeigemittel einen Touchscreen auf, an der symbolisch das FTF 10 dargestellt wird. Nach dem Scannen des Barcodes eines Behälters wird auf dem Touchscreen angezeigt, an welcher Position in welchem der Abgabeschächte des FTF 10 der Behälter positioniert werden soll. Der Logistiker setzt den Behälter daran anschließend an die angezeigte Position und quittiert den so vorgenommenen Teil-Ladevorgang auf dem Touchscreen.

Daraufhin kann ein weiterer Behälter gescannt und auf das FTF 10 geladen werden. Dieser Teil-Beladevorgang wiederholt sich so oft, bis sämtliche von dem FTF 10 bei der anstehenden Transportfahrt zu transportierenden Behälter auf das FTF 10 geladen sind bzw. alle Positionen des FTF 10 mit Behältern besetzt sind.

Die Verteilung von Behältern auf ein FTF 10 oder eine Mehrzahl von FTF wird durch die zentrale Einrichtung gesteuert.

Anstatt mittels eines Barcodes oder einer anderen optoelektronisch lesbaren Schrift können die auf das FTF 10 zu ladenden Behälter auch auf andere Weise identifiziert werden. Beispielsweise können die Behälter mittels einer Kamera gescannt werden, oder die einzelnen Behälter können mit einem Transponder, beispielsweise einem RFID-Transponder, versehen sein. Um die Anordnung der Behälter an dem FTF 10 zu überprüfen, können Lokalisierungsmittel zur automatischen Identifizierung und/oder Lokalisierung von Behältern an dem FTF 10 vorgesehen sein. Bei einer Ausführungsform, bei der die einzelnen Behälter mit einem RFID-Transponder versehen sind, können diese Lokalisierungsmittel ein Lesegerät für den an den jeweiligen Behälter angeordneten Transponder aufweisen. Auf diese Weise kann die korrekte Beladung des FTF 10 mit Behältern überprüft werden.

Nach erfolgter Beladung steuert die zentrale Einrichtung das FTF 10 derart an, dass das FTF von der Beladeposition zu einer durch die zentrale Einrichtung vorgegebenen Abgabeposition fährt zur Abgabe von geladenen und gefüllten Behältern an wenigstens ein Entnahmeregal 8.

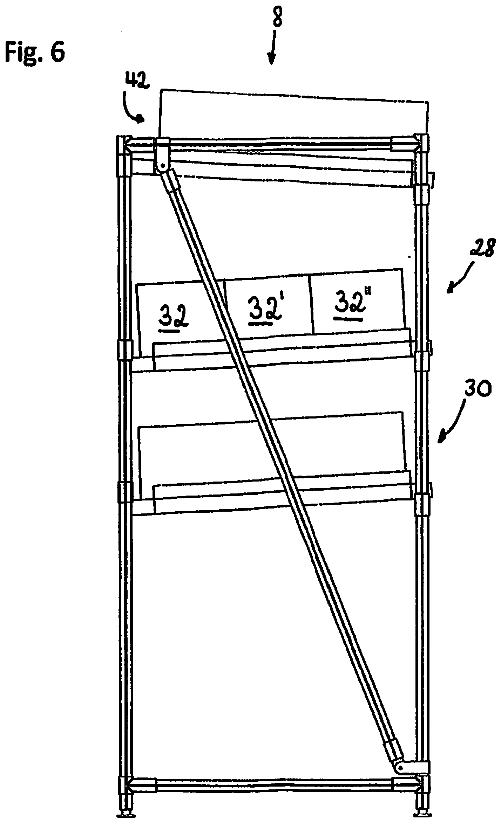

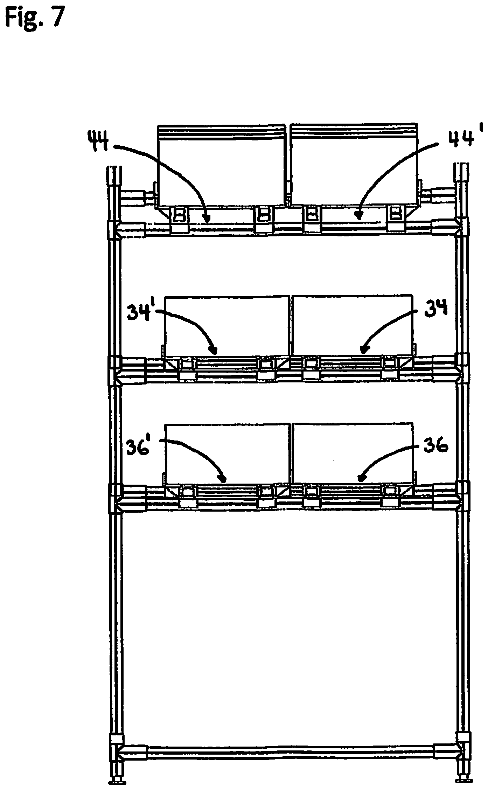

Figur 6 zeigt das Entnahmeregal 8 in einer Seitenansicht, während Figur 7 das Entnahmeregal 8 in einer Ansicht von vorne darstellt. Das Entnahmeregal 8 weist übereinander angeordnete Lagerschächte 28,30 auf, die in Analogie zu den Abgabeschächten 14,16 das FTF 10 als schiefe Ebene mit einer Rollenbahn ausgebildet sein können. Figur 6 und Figur 7 stellen das Entnahmeregal 8 in einem Zustand dar, in dem es mit Behältern gefüllt ist, von denen exemplarisch in Figur 6 drei Behälter mit dem Bezugszeichen 32,32',32'' bezeichnet sind. Wie aus Figur 7 ersichtlich ist, sind in den Lagerschächten 28,30 jeweils zwei Ablaufbahnen 34,34' bzw. 36,36' nebeneinander angeordnet.

Zur automatischen Abgabe beispielsweise des Behälters 20 aus dem Abgabeschacht 14 des FTF 10 an den Lagerschacht 28 des Entnahmeregals 8 wird das FTF von der zentralen Einrichtung, ggf. unter Zuhilfenahme einer an dem FTF 10 vorgesehenen Steuerung, so vor dem Entnahmeregal 8 positioniert, dass der Abgabeschacht 14 des FTF 10 mit dem Lagerschacht 28 des Entnahmeregals 8 fluchtet.

In dieser Abgabeposition wird der Position 18 in dem Abgabeschacht 14 zugeordnete Riegel aus der in Figur 4 dargestellten Sperrposition in die in Figur 5 dargestellte Abgabeposition gesteuert, so dass der Behälter 20 unter der Wirkung der Schwerkraft über die als schiefe Ebene ausgebildete Rollenbahn des Abgabeschachtes 14 abrollt und dabei in den Lagerschacht 28 des Entnahmeregales 8 abgegeben wird. Da sich hierbei die den Positionen 18',18'' des Abgabeschachtes 14 zugeordneten Riegel weiterhin in ihrer Sperrposition befinden, verbleiben die Behälter 20',20'' in dem Abgabeschacht 14. Falls entsprechend dem jeweiligen Materialbedarf an dem Entnahmeregal 8 erforderlich, können die Behälter 20',20'' jedoch auch zeitgleich mit dem Behälter 20 oder zeitlich darauffolgend an den Lagerschacht 28 des Entnahmeregales 8 abgegeben werden.

Um zu prüfen, dass ein oder mehrere Behälter tatsächlich in der gewünschten Weise an das Entnahmeregal 8 abgegeben worden sind, können Sensormittel vorgesehen sein.

Bei dem dargestellten Ausführungsbeispiel ist das FTF 10 zur Aufnahme von Leerbehältern an den Entnahmeregalen 8 ausgebildet. Wie aus den Figuren 2 und 3 ersichtlich, weist das FTF 10 oberhalb des Abgabeschachtes 14 einen Aufnahmeschacht 38 für Leerbehälter auf. Aus Figur 3 ist ersichtlich, dass in dem Aufnahmeschacht 38 seitlich nebeneinander zwei Ablaufbahnen 40,40' ausgebildet sind. Die Ablaufbahnen 40,40' sind analog zu den Abgabeschächten 14 des FTF ausgebildet und jeweils nach Art einer schiefen Ebene mit einer Rollenbahn ausgestaltet, wobei die Neigung der schiefen Ebene des Aufnahmeschachtes 38 zu derjenigen des Abgabeschachtes 14 entgegengesetzt ist.

Wie beispielsweise aus Figur 6 ersichtlich ist, ist an dem Entnahmeregal 8 ein Abgabeschacht 42 mit zwei seitlich nebeneinander angeordneten Ablaufbahnen 44,44' (vgl. Figur 7) angeordnet. Die Ablaufbahnen 44,44' sind in Analogie zu den Abgabeschächten 14,16 des FTF 10 und den Lagerschächten 28,30 des Entnahmeregales 8 als schiefe Ebene mit Rollenbahn ausgebildet, wobei die Neigung der schiefen Ebene zu derjenigen der Lagerschächte 28,30 entgegengesetzt ist.

Die Abgabe von Leerbehältern aus dem Abgabeschacht 42 des Entnahmeregales 8 an den Aufnahmeschacht 38 des FTF 10 kann zeitgleich mit der Abgabe von Behältern von dem FTF 10 an das Entnahmeregal 8 oder davor oder danach erfolgen.

Im Sinne einer automatischen Abgabe der Leerbehälter an das FTF 10 kann dem Abgabeschacht 42 des Entnahmeregales 8 beispielsweise ein Sperrelement zugeordnet sein, wie es anhand der Figuren 5 und 6 in Bezug auf das FTF 10 beschrieben worden ist. Durch entsprechende Steuerung kann beispielsweise die Ablaufbahn 44 für eine Abgabe von Leerbehältern an das FTF 10 freigegeben werden, wobei sich die Leerbehälter dann aufgrund der Schwerkraft über die Rollenbahn in Figur 6 nach rechts bewegen und von dem Aufnahmeschacht 38 des FTF 10 aufgenommen werden. An dem in Ablaufrichtung vorderen Ende des Aufnahmeschachtes 38, also an dem in Figur 2 rechten Ende, kann den Ablaufbahnen 40,40' wiederum ein Sperrelement zugeordnet sein, das so aufgebaut sein kann, wie anhand der Figuren 5 und 6 beschrieben. Durch das sich in seiner Sperrposition befindliche Sperrelement ist verhindert, dass in dem Aufnahmeschacht 38 aufgenommene Leerbehälter aufgrund der Schwerkraft über die seitliche Begrenzung des FTF 10 weiter rollen.

Bei einer automatischen Abgabe von Leerbehältern von dem FTF 10 beispielsweise an den Behälter-Lagerbereich 6 können die den Ablaufbahnen 40,40' des Aufnahmeschachtes 38 zugeordneten Sperrelemente dann in ihrer Abgabeposition gesteuert werden.

In der Höhe ist der Aufnahmeschacht 38 des FTF so an den Abgabeschacht 42 des Entnahmeregales 8 angepasst, dass das in Ablaufrichtung vordere Ende des Abgabeschachtes 42 auf der gleichen Höhe liegt, wie das in Ablaufrichtung hintere Richtung des Aufnahmeschachtes 38, wenn sich das FTF 10 vor der Entnahmeregal 8 befindet.

Nach erfolgter Abgabe von gefüllten Behältern von dem FTF 10 an das Entnahmeregal 8 und Aufnahme von Leerbehältern durch das FTF 10, kann die Transportfahrt des FTF gesteuert durch die zentrale Einrichtung fortgesetzt werden. Hierzu kann das FTF 10 entweder weitere Entnahmeregale zur Abgabe von gefüllten Behältern und/oder zur Aufnahme von Leerbehältern anfahren oder zu dem Behälter-Lagerbereich 6 zurückkehren.

In dem Behälter-Lagerbereich kann das FTF 10 dann zur Vorbereitung einer weiteren Transportfahrt erneut gefüllte Behälter aufnehmen. In einem LeerbehälterÜbergabebereich, der beispielsweise in dem Behälter-Lagerbereich 6 gebildet sein kann, können Aufnahmemittel zur voll- oder teilautomatischen Aufnahme von durch ein FTF 10 bereitgestellten Leerbehältern vorgesehen sein. Es ist jedoch auch möglich, dass Leerbehälter, die ein FTF 10 von einer Transportfahrt mitgebracht hat, in dem Behälter-Lagerbereich manuell von Logistikern abgeladen werden.

Es ist auch möglich, zusätzlich zu dem FTF 10 wenigstens ein "Leergut-FTF" vorzusehen, dessen vornehmliche Aufgabe darin besteht, Leerbehälter von den Entnahmeregalen 8 abzuholen. Die Steuerung eines oder mehrerer FTF ist dem Fachmann allgemein bekannt und wird daher hier nicht näher erläutert. Insbesondere können die verwendeten FTF auf unterschiedlichen Fahrwegen verfahren, wobei beispielsweise Ausweichschleifen vorgesehen sein können.

Um beispielsweise an der zentralen Einrichtung stets über die Position eines FTF 10 informiert zu sein, können Mittel zur Positionsermittlung und/oder Visualisierung wenigstens eines FTF vorgesehen sein. Auf diese Weise ist jederzeit feststellbar, wo sich ein FTF gerade befindet. Dies ist insbesondere dann vorteilhaft, wenn eine Störung auftritt.

Alle zuvor beschriebenen Steuerungsvorgänge zur Ansteuerung des FTF 10 und seiner Bestandteile sowie weiterer voll- oder teilautomatischer Bestandteile des Produktionssystems können von der zentralen Einrichtung ausgeführt werden. Es ist jedoch auch möglich, zumindest einen Teil der Steuerungsvorgänge insbesondere des FTF 10 durch eine an dem FTF 10 vorgesehenene Steuerung auszuführen. Die Erfindung stellt damit ein Produktionssystem und ein FTF 10 bereit, durch das die Anlieferung von Material in einem Produktionssystem für die Serienproduktion insbesondere von Kraftfahrzeugen weitgehend automatisierbar ist.

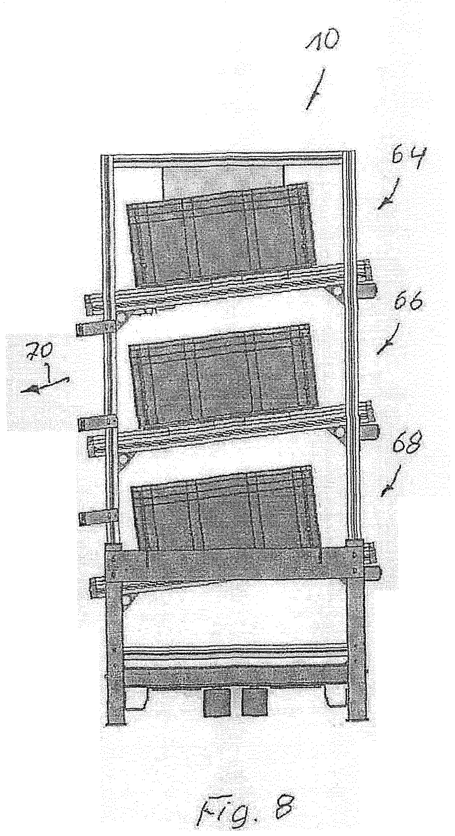

Anhand der Fig. 8 bis 14 wird nachfolgend ein Ausführungsbeispiel eines FTF mit Transportregal näher erläutert, das erfindungsgemäß ausgestaltet ist.

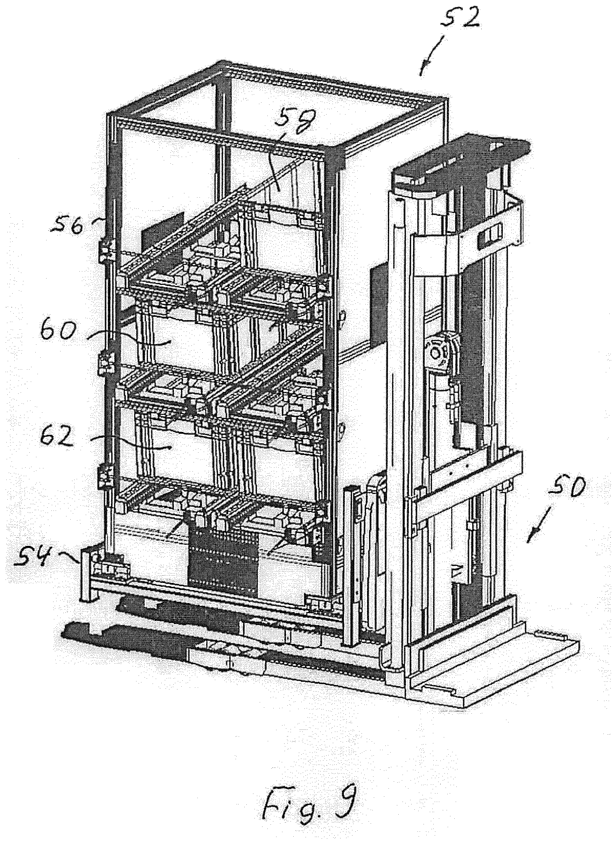

Das FTF gemäß den Fig. 8 bis 14 ist durch einen fahrerlosen Stapler 50 (vgl. Fig. 9) gebildet, der ein Transportregal 52 trägt, das einen Grundkörper 54 aufweist, an dem ein Träger 56 für Behälter angeordnet ist, von denen in Fig. 8 bis Fig. 14 drei Behälter mit den Bezugszeichen 58, 60, 62 bezeichnet sind. Abweichend von dem Ausführungsbeispiel gemäß den Fig. 1 bis 7 wird das FTF 50 bei diesem Ausführungsbeispiel per Lasernavigation gesteuert.

Fig. 8 zeigt (in Analogie zu Fig. 2) eine Ansicht, in der erkennbar ist, dass der Träger 56 übereinander angeordnete Abgabeschächte 64, 66, 68 aufweist, die so ausgebildet sind, wie dies anhand der Figuren 2 bis 7 beschrieben worden ist. Die Abgaberichtung bei der Abgabe der Behälter 58, 60, 62 an ein Entnahmeregal ist in Fig. 8 durch einen Pfeil 70 gekennzeichnet.

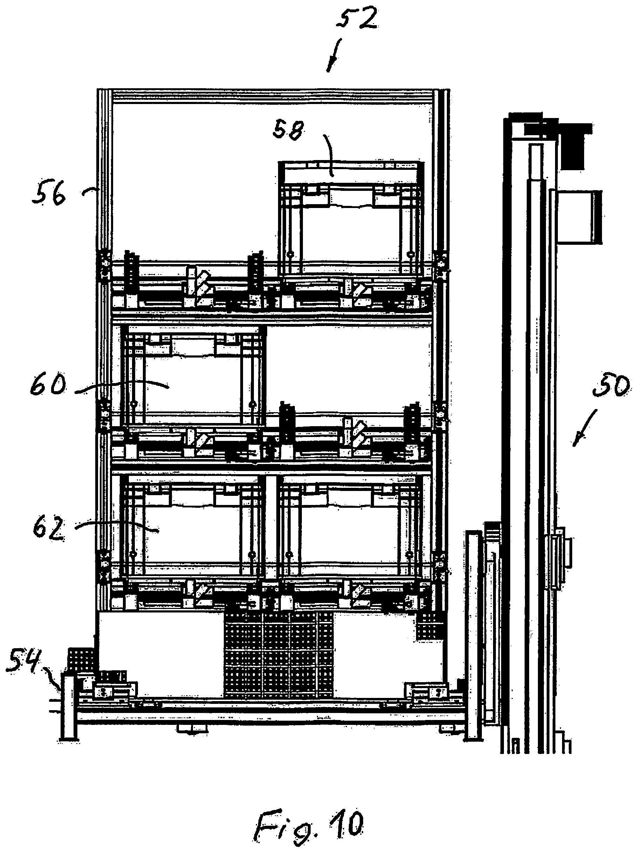

Fig. 9 und Fig. 10 zeigen das FTF 50 nebst Transportregal 52 in einer Perspektiv- und einer Seitenansicht.

Erfindungsgemäß ist der Träger 56 quer zur Abgaberichtung 70 parallel zu einer im wesentlichen horizontalen Ebene relativ zu dem Grundkörper 54 des an dem FTF 50 angeordneten Transportregales 52 verstellbar angeordnet, wobei Mittel zum Verstellen des Trägers 56 relativ zu dem Grundkörper 54 vorgesehen sind, die derart ausgebildet sind, dass bei vor einem Entnahmeregal ortsfest angeordnetem FTF die Position des Trägers 56 relativ zu dem Grundkörper 54 und damit relativ zu dem Entnahmeregal quer zur Abgaberichtung 70 parallel zu einer im wesentlichen horizontalen Ebene verstellbar ist.

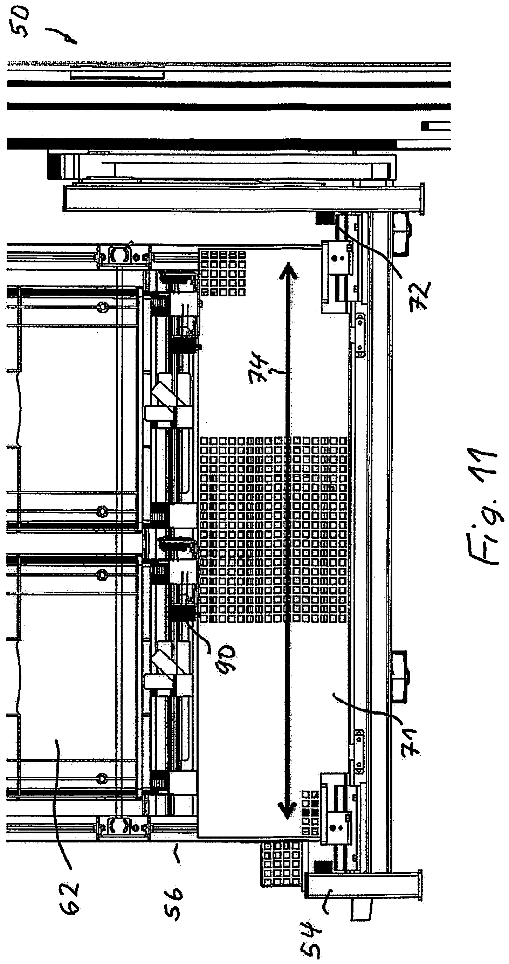

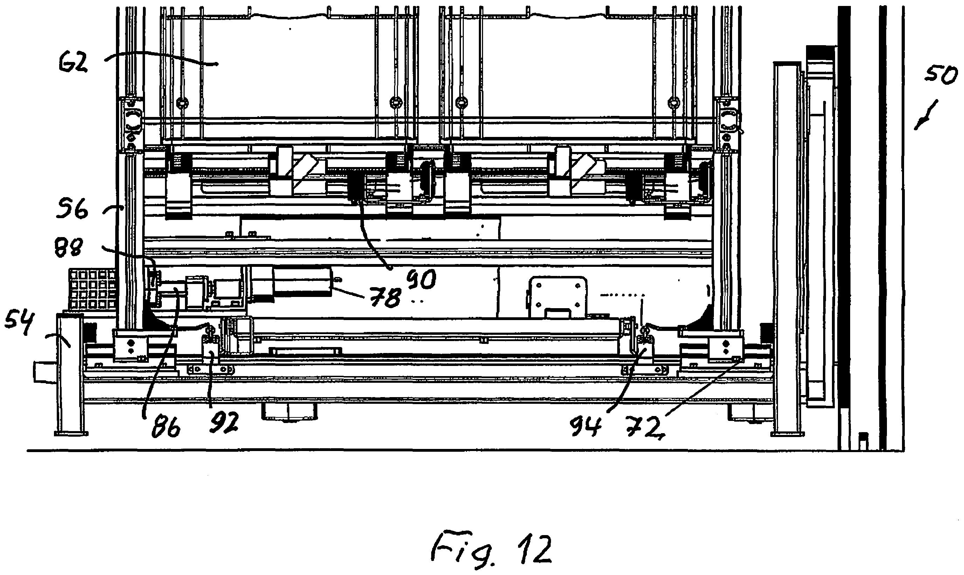

Fig. 11 und Fig. 12 zeigen in gegenüber Fig. 10 vergrößertem Maßstab eine Einzelheit im Bereich einer Verbindung des Trägers 56 mit dem Grundkörper 54. In Fig. 12 ist aus Gründen der Veranschaulichung eine Verkleidung 71 des Grundkörpers 54 weggelassen.

Bei dem dargestellten Ausführungsbeispiel ist der Träger 56 über eine Linearführung 72 entlang einer zur Abgaberichtung 70 quer verlaufenden Verstellachse 74 (in Fig. 11 durch einen Doppelpfeil symbolisiert) relativ zu dem Grundkörper 54 verstellbar an dem Grundkörper 54 angeordnet.

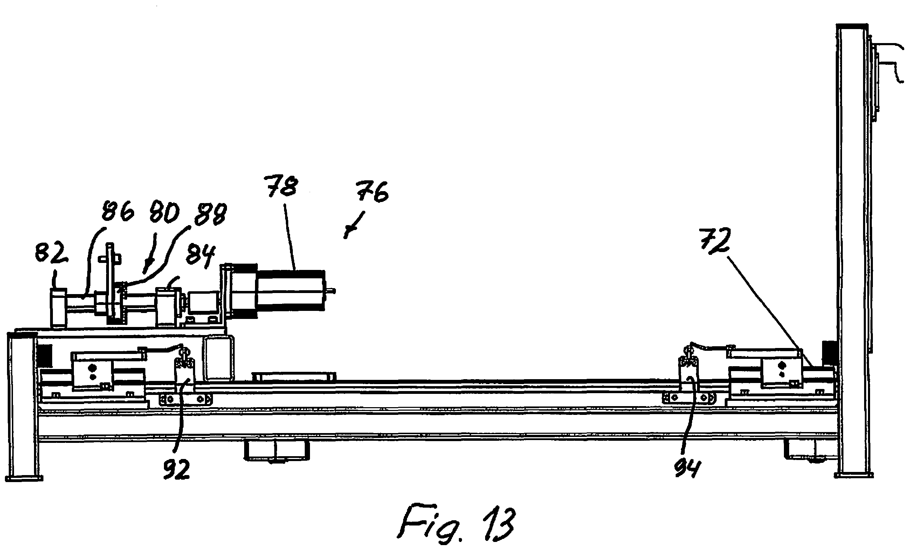

In Fig. 13 sind aus Gründen der Veranschaulichung weitere Bestandteile des Grundkörpers 54 und des Trägers 56 weggelassen.

Dem Träger 56 sind zum Verstellen desselben relativ zu dem Grundkörper 54 Antriebsmittel zugeordnet, die bei diesem Ausführungsbeispiel einen elektromotorischen Antrieb 76 aufweisen (vgl. insbesondere Fig. 13), der durch Steuerungsmittel ansteuerbar ist.

Der elektromotorische Antrieb 76 weist einen Elektromotor 78 auf, der mit einem Spindeltrieb 80 in Wirkungsverbindung steht, der zum Verstellen des Trägers 56 relativ zu dem Grundkörper 54 in Richtung des Doppelpfeiles 74 dient.

Der Spindeltrieb 80 weist eine über Drehlager 82, 84 drehbar gelagerte, ortsfeste Gewindespindel 86 auf, die mit dem Elektromotor 78 in Drehantriebsverbindung steht. Die aus dem Elektromotor 78, den Drehlagern 82, 84 und der Gewindespindel 86 bestehende Baugruppe ist verschiebefest mit dem Grundkörper 54 des Transportregales 52 verbunden.

Auf der Gewindespindel 86 ist in deren Axialrichtung beweglich eine Spindelmutter 88 angeordnet, die verdrehsicher mit dem Träger 56 verbunden ist. Bei Drehung der Gewindespindel 86 unter der Drehantriebswirkung des Elektromotors 78 bewegt sich damit die Spindelmutter 88 relativ zu der Gewindespindel 86 entsprechend der Drehrichtung der Abtriebswelle des Elektromotors 78 in der einen oder anderen Richtung, so dass auf diese Weise der Träger 56 relativ zu dem Grundkörper 54 entlang der Verstellachse 74 verstellbar ist, um den Träger 56 relativ zu einem Entnahmeregal seitlich feinzupositionieren.

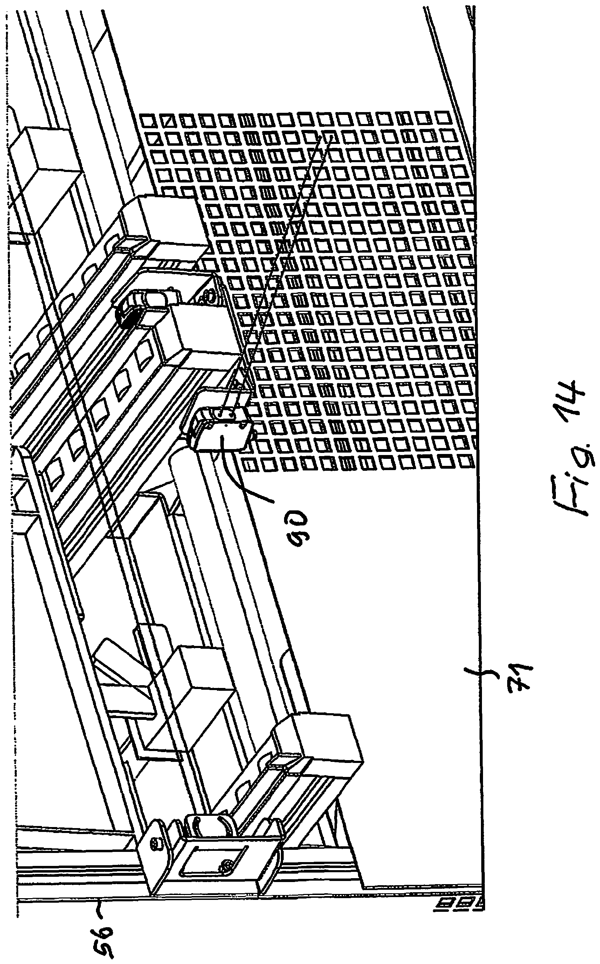

Fig. 14 zeigt in einer Perspektivansicht eine Einzelheit aus Fig. 11.

Bei dem dargestellten Ausführungsbeispiel sind Mittel zur Feststellung der Ist-Position des FTF 10 relativ zu dem Entnahmeregal vorgesehen, die mit den Steuerungsmitteln der Antriebsmittel in Datenübertragungsverbindung stehen. Die Mittel zur Feststellung der Ist-Position des FTF weisen Sensormittel zur Abtastung wenigstens eines Merkmals an dem Entnahmeregal auf. Die Sensormittel weisen optische Sensormittel auf, die bei dem dargestellten Ausführungsbeispiel einen Laser 90 (vgl. Fig. 12 und insbesondere Fig. 14) aufweisen, der zur Abtastung eines optischen Merkmals an dem Entnahmeregal ausgebildet ist. Die Funktionsweise entsprechender Laser ist dem Fachmann allgemein bekannt und wird daher hier nicht näher erläutert.

Zur Abschaltung des Antriebs 78 in Endpositionen des Verstellhubs des Trägers 56 relativ zu dem Grundkörper 54 sind Endschalter 92, 94 (vgl. Fig. 12 und Fig. 13) vorgesehen.

Die Funktionsweise des erfindungsgemäßen Produktionssystems ist wie folgt:
Das FTF 50 wird durch die zentrale Einrichtung zu dem jeweiligen Entnahmeregal gesteuert und hält vor diesem an. Dabei ist die Fahrsteuerung des FTF 50 derart programmiert ist, dass die Fahrtrichtung des FTF 50 quer zur Abgaberichtung 70 verläuft und sich das FTF 50 bei der Annäherung an das jeweilige Entnahmeregal bezogen auf die Abgaberichtung in Querfahrt bewegt. Mit anderen Worten fährt das FTF 50 seitlich an dem jeweiligen Entnahmeregal entlang. Hierbei tastet der Laser das Entnahmeregal ab, wobei als Referenzpunkt eine hierzu vorgesehene, an dem Entnahmeregal angebrachte Marke verwendet werden kann. Zweckmäßigerweise wird als Referenzpunkt jedoch eine Schiene eines Lagerschachtes des Entnahmeregales herangezogen.

Aufgrund der Abtastung eines Referenzpunktes an dem Entnahmeregal durch die Sensormittel 80 kann damit die Ist-Position des FTF 50 relativ zu dem Entnahmeregal festgestellt werden.

Wird beispielsweise festgestellt, dass das FTF 50 an der gewünschten Soll-Position, in der der jeweilige Abgabeschacht des FTF 10 mit dem zugeordneten Lagerschacht des Entnahmeregales fluchtet, "vorbeigefahren" ist, so steuern die Steuerungsmittel die elektromotorischen Antriebsmittel 76 so an, dass diese den Träger 56 relativ zu dem Grundkörper 54 entgegen der vorherigen Fahrtrichtung soweit bewegen, bis sich der Träger 56 in der gewünschten Soll-Position befindet. In dieser Position kann dann der jeweilige Behälter von dem FTF 50 an den Lagerschacht des Entnahmeregales abgegeben werden.

Kommt das FTF exakt in einer Position zum Stehen, die der Soll-Position des Trägers 56 vor dem Entnahmeregal entspricht, so ist eine entsprechende Feinpositionierung des Trägers 56 mittels des elektromotorischen Antriebs 76 nicht erforderlich.

Ist das FTF 50 gesteuert durch die zentrale Einrichtung in einer Position zum Stillstand gekommen, in der die Soll-Position in Fahrtrichtung noch nicht erreicht ist, was wiederum durch Abtastung eines Referenzpunktes an dem Entnahmeregal durch die Sensormittel (Laser 90) festgestellt wird, so steuern die Steuerungsmittel den elektromotorischen Antrieb 76 so an, dass der Träger 56 relativ zu dem Grundkörper 54 in der vorherigen Fahrtrichtung soweit bewegt wird, bis die Soll-Position erreicht ist.

Auf diese Weise ist eine Feinpositionierung des Trägers 56 relativ zu dem Grundkörper des Transportregales 52 und damit bei stillstehendem FTF 50 relativ zu dem Entnahmeregal ermöglicht, so dass Funktionsstörungen aufgrund einer Fehlausrichtung des Trägers 56 relativ zu dem Entnahmeregal zuverlässig vermieden sind. Die Funktionssicherheit des erfindungsgemäßen Produktionssystems ist damit wesentlich erhöht.

Sofern der lineare Verstellhub bei der Verstellung des Trägers 56 relativ zu dem Grundkörper 54 in Fahrtrichtung bzw. entgegen der Fahrtrichtung des FTF 10 nicht ausreichend ist, um den Träger 56 in die Soll-Position zu bringen, so können die Steuerungsmittel im Zusammenwirken mit der zentralen Einrichtung, die das FTF 50 steuert, bewirken, dass das FTF 50 in eine Position bewegt wird, in der der Verstellhub ausreicht, um den Träger 56 in die Soll-Position zu bringen.

## Patentansprüche

1. Produktionssystem (2) für die Serienproduktion insbesondere von Kraftfahrzeugen,
mit einem Behälter-Lagerbereich (6) zur Lagerung von Behältern, die für die Produktion bestimmte Bauteile enthalten,
mit einer Mehrzahl von entfernt von dem Behälter-Lagerbereich (6) angeordneten Entnahmeregalen (8), aus denen Bauteile aus Behältern von Werkern entnehmbar sind, und
mit Transportmitteln zum Transport von Behältern aus dem Behälter-Lagerbereich (6) zu den Entnahmeregalen (8),
wobei die Transportmittel wenigstens ein FTF (10, 50), d.h. ein fahrerloses Transportfahrzeug (10, 50), aufweisen, an dem ein Transportregal (52) angeordnet und derart ausgebildet ist, dass Behälter aus dem Transportregal (52) in einer Förderrichtung, d.h. in einer Abgaberichtung, automatisch an Entnahmeregale (6) abgebbar sind oder abgegeben werden, **dadurch gekennzeichnet,**
**dass** das Transportregal (52) einen mit dem FTF (10, 50) verbundenen oder verbindbaren Grundkörper (54) aufweist, an dem ein Träger (56) für zu transportierende Behälter (58, 60, 62) angeordnet ist,
**dass** der Träger (56) quer zur Abgaberichtung (70) parallel zu einer im Wesentlichen horizontalen Ebene verstellbar an dem Grundkörper (54) angeordnet ist, und
**dass** Mittel zum Verstellen des Trägers (56) relativ zu dem Grundkörper (54) vorgesehen sind, die derart ausgebildet sind, dass bei vor einem Entnahmeregal (6) ortsfest angeordnetem FTF (10, 50) die Position des Trägers (56) relativ zu dem Entnahmeregal (6) quer zur Abgaberichtung (70) parallel zu einer im wesentlichen horizontalen Ebene verstellbar ist.

2. Produktionssystem nach Anspruch 1, **dadurch gekennzeichnet, dass** die Mittel zum Verstellen des Trägers (56) derart ausgebildet sind, dass sie den Träger (56) bei vor dem Entnahmeregal ortsfest angeordnetem FTF (10, 50) relativ zu dem Entnahmeregal (8) ausgehend von einer Ist-Position in eine Soll-Position verstellen.

3. Produktionssystem nach Anspruch 1 oder 2, **dadurch gekennzeichnet, dass** in der Soll-Position des Trägers (56) eine Abgabebahn des Trägers (56) fluchtend oder annähernd fluchtend zu einer Aufnahmebahn an dem Entnahmeregal (8) ausgerichtet ist.

4. Produktionssystem nach Anspruch 3, **dadurch gekennzeichnet, dass** die Abgabebahn durch einen an dem Träger (56) des Transportregales (52) gebildeten Abgabeschacht und die Aufnahmebahn durch einen an dem Entnahmeregal (8) gebildeten Lagerschacht definiert ist.

5. Produktionssystem nach Anspruch 4, **dadurch gekennzeichnet, dass** jeder Abgabeschacht bzw. Lagerschacht jeweils durch zwei seitlich zueinander beabstandete Schienen definiert ist, an oder auf denen die Behälter führbar sind oder geführt werden.

6. Produktionssystem nach einem der vorhergehenden Ansprüche, **dadurch gekennzeichnet, dass** dem Träger (56) zum Verstellen desselben relativ zu dem Grundkörper (54) Antriebsmittel zugeordnet sind und wobei Steuerungsmittel zur Ansteuerung der Antriebsmittel vorgesehen sind.

7. Produktionssystem nach Anspruch 6, **dadurch gekennzeichnet, dass** die Steuerungsmittel für eine automatische Ansteuerung der Antriebsmittel derart ausgebildet und eingerichtet sind, dass bei vor einem Entnahmeregal (8) ortsfest angeordnetem FTF (10, 50) der Träger (56) relativ zu dem Entnahmeregal ausgehend von einer Ist-Position in eine Soll-Position verstellt wird.

8. Produktionssystem nach einem der Ansprüche 2 bis 6, **dadurch gekennzeichnet, dass** die Antriebsmittel wenigstens einen elektromotorischen Antrieb (78), insbesondere Linearantrieb, aufweisen.

9. Produktionssystem nach Anspruch 8, **dadurch gekennzeichnet, dass** der Antrieb (78) einen Spindeltrieb (86, 88) aufweist, der mit einem Elektromotor in Wirkungsverbindung steht.

10. Produktionssystem nach einem der vorhergehenden Ansprüche, **dadurch gekennzeichnet, dass** Mittel zur Feststellung der Ist-Position des FTF (10, 50) relativ zu dem Entnahmeregal (8) vorgesehen sind, die mit den Steuerungsmitteln der Antriebsmittel in Datenübertragungsverbindung stehen.

11. Produktionssystem nach Anspruch 10, **dadurch gekennzeichnet, dass** die Mittel zur Feststellung der Ist-Position des FTF (10, 50) Sensormittel zur Abtastung wenigstens eines Merkmals an dem Entnahmeregal (8) aufweisen.

12. Produktionssystem nach Anspruch 11, **dadurch gekennzeichnet, dass** die Sensormittel optische Sensormittel aufweisen.

13. Produktionssystem nach Anspruch 12, **dadurch gekennzeichnet, dass** die optischen Sensormittel wenigstens eine Kamera aufweisen.

14. Produktionssystem nach Anspruch 12 oder 13, **dadurch gekennzeichnet, dass** die optischen Sensormittel wenigstens einen Laser (90) aufweisen, der zur Abtastung eines optischen Merkmals an dem Entnahmeregal ausgebildet ist.

15. Produktionssystem nach einem der vorhergehenden Ansprüche, **dadurch gekennzeichnet, dass** die Fahrsteuerung des FTF (10, 50) derart programmiert ist, dass die Fahrtrichtung des FTF quer zur Abgaberichtung verläuft, derart, dass sich das FTF bei der Annäherung an das jeweilige Entnahmeregal (8) bezogen auf die Abgaberichtung (70) in Querfahrt bewegt.

16. Produktionssystem nach Anspruch 15, **dadurch gekennzeichnet, dass** die Sensormittel zur Erfassung wenigstens eines die Soll-Position kennzeichnenden Merkmals an dem Entnahmeregal (8) während der Querfahrt ausgebildet und programmiert sind.

17. Produktionssystem nach einem der Ansprüche 10 bis 16, **dadurch gekennzeichnet, dass** die Mittel zur Feststellung der Ist-Position des FTF (10, 50) relativ zu dem Entnahmeregal (8) mit der Fahrsteuerung des FTF in Datenübertragungsverbindung stehen.

18. Produktionssystem nach einem der vorhergehenden Ansprüche, **dadurch gekennzeichnet, dass** wenigstens ein FTF (10, 50) durch einen fahrerlosen Stapler gebildet ist, der das Transportregal (52) trägt.

## Claims

1. Production system (2) for series production, in particular of motor vehicles, having a container storage area (6) for storing containers which contain components intended for production, having a plurality of removal shelves (8) which are arranged at a distance from the container storage area (6) and from which components are removable from containers by workers, and having transport means for transporting containers from the container storage area (6) to the removal shelves (8), the transport means having at least one AGV (10, 50), i.e. a driverless transport vehicle (10, 50), on which a transport shelf (52) is arranged and designed in such a way that containers can be removed from the transport shelf (52) in a conveying direction, i.e. in a discharge direction, to removal shelves (6), **characterized in that**
the transport shelf (52) has a base body (54) which is connected or can be connected to the AGV (10, 50) and on which a carrier (56) for containers (58, 60, 62) to be transported is arranged,
**in that** the carrier (56) is arranged on the base body (54) such that it can be adjusted transversely with respect to the discharge direction (70) parallel to a substantially horizontal plane,
and
**in that** means are provided for adjusting the carrier (56) relative to the base body (54), which means are designed in such a way that, with the AGV (10, 50) arranged in a fixed position in front of a removal shelf (6), the position of the carrier (56) relative to the removal shelf (6) can be adjusted transversely with respect to the delivery direction (70) parallel to a substantially horizontal plane.

2. Production system according to claim 1, **characterised in that** the means for adjusting the carrier (56) are designed in such a way that they adjust the carrier (56) relative to the removal shelf (8) starting from an actual position into a desired position when the AGV (10, 50) is arranged stationary in front of the removal shelf.

3. Production system according to claim 1 or 2, **characterised in that**, in the desired position of the carrier (56), a delivery path of the carrier (56) is aligned or approximately aligned with a receiving path on the removal shelf (8).

4. Production system according to claim 3, **characterised in that** the delivery path is defined by a delivery shaft formed on the carrier (56) of the transport shelf (52) and the receiving path is defined by a storage shaft formed on the removal shelf (8).

5. Production system according to claim 4, **characterised in that** each delivery shaft or storage shaft is defined by two laterally spaced rails on which the containers can be or are guided.

6. Production system according to one of the preceding claims, **characterised in that** drive means are associated with the carrier (56) for adjusting the latter relative to the base body (54) and wherein control means are provided for controlling the drive means.

7. Production system according to claim 6, **characterised in that** the control means for automatic control of the drive means are designed and set up in such a way that, with the AGV (10, 50) arranged stationary in front of a removal shelf (8), the carrier (56) is adjusted relative to the removal shelf starting from an actual position into a desired position.

8. Production system according to one of claims 2 to 6, **characterised in that** the drive means comprise at least one electromotive drive (78), in particular linear drive.

9. Production system according to claim 8, **characterized in that** the drive (78) has a spindle drive (86, 88) which is operatively connected to an electric motor.

10. Production system according to one of the preceding claims, **characterized in that** means are provided for determining the actual position of the AGV (10, 50) relative to the removal shelf (8), which means are in data transmission connection with the control means of the drive means.

11. Production system according to claim 10, **characterised in that** the means for determining the actual position of the AGV (10, 50) comprise sensor means for sensing at least one feature on the removal shelf (8).

12. Production system according to claim 11, **characterized in that** the sensor means comprise optical sensor means.

13. Production system according to claim 12, **characterised in that** the optical sensor means comprise at least one camera.

14. Production system according to claim 12 or 13, **characterised in that** the optical sensor means comprise at least one laser (90) which is designed to scan an optical feature on the removal shelf.

15. Production system according to one of the preceding claims, **characterised in that** the travel control of the AGV (10, 50) is programmed in such a way that the travel direction of the AGV runs transversely to the delivery direction in such a way that the AGV moves in transverse travel in relation to the delivery direction (70) when approaching the respective removal shelf (8).

16. Production system according to claim 15, **characterized in that** the sensor means are designed and programmed for detecting at least one feature characterizing the desired position on the removal shelf (8) during the transverse travel.

17. Production system according to one of the claims 10 to 16, **characterised in that** the means for determining the actual position of the AGV (10, 50) relative to the removal shelf (8) are in data transmission connection with the travel control of the AGV.

18. Production system according to one of the preceding claims, **characterized in that** at least one AGV (10, 50) is formed by a driverless stacker which carries the transport shelf (52).

## Revendications

1. Système de production (2) pour la production en série en particulier de véhicules automobiles, comprenant
une zone de stockage de récipients (6) pour stocker des récipients qui contiennent des composants destinés à la production,
une pluralité de rayonnages de prélèvement (8) disposés à distance de la zone de stockage de récipients (6), permettant aux opérateurs de prélever des composants dans des récipients, et
des moyens de transport pour transporter des récipients de la zone de stockage de récipients (6) vers les rayonnages de prélèvement (8),
les moyens de transport comprenant au moins un AGV (10, 50), c'est-à-dire un véhicule de transport sans conducteur (10, 50), sur lequel est disposé un rayonnage de transport (52) réalisé de telle sorte que des récipients peuvent être distribués ou sont distribués automatiquement depuis le rayonnage de transport (52) dans une direction de transport, c'est-à-dire dans une direction de distribution, vers des rayonnages de prélèvement (6),
**caractérisé en ce que**
le rayonnage de transport (52) comprend un corps de base (54) relié ou susceptible d'être relié à l'AGV (10, 50), sur lequel est disposé un support (56) pour des récipients (58, 60, 62) à transporter,
**en ce que** le support (56) est disposé sur le corps de base (54) de manière à pouvoir être déplacé transversalement à la direction de distribution (70) parallèlement à un plan sensiblement horizontal, et
**en ce qu'**il est prévu des moyens de déplacement du support (56) par rapport au corps de base (54), qui sont réalisés de manière à permettre de déplacer la position du support (56) par rapport au rayonnage de prélèvement (6) transversalement à la direction de distribution (70) parallèlement à un plan sensiblement horizontal, lorsque l'AGV (10, 50) est disposé de manière fixe devant un rayonnage de prélèvement (6).

2. Système de production selon la revendication 1,
**caractérisé en ce que** les moyens de déplacement du support (56) sont réalisés de manière à déplacer le support (56) par rapport au rayonnage de prélèvement (8) à partir d'une position réelle vers une position de consigne, lorsque l'AGV (10, 50) est disposé de manière fixe devant le rayonnage de prélèvement.

3. Système de production selon la revendication 1 ou 2,
**caractérisé en ce que**, dans la position de consigne du support (56), une voie de distribution du support (56) est orientée en alignement ou approximativement en alignement avec une voie de réception sur le rayonnage de prélèvement (8).

4. Système de production selon la revendication 3,
**caractérisé en ce que** la voie de distribution est définie par un puits de distribution formé sur le support (56) du rayonnage de transport (52), et la voie de réception est définie par un puits de stockage formé sur le rayonnage de prélèvement (8).

5. Système de production selon la revendication 4,
dans lequel chaque puits de distribution ou puits de stockage est défini par deux rails espacés latéralement l'un de l'autre, au niveau desquels ou sur lesquels les récipients peuvent être guidés ou sont guidés.

6. Système de production selon l'une des revendications précédentes,
**caractérisé en ce que** des moyens d'entraînement sont associés au support (56) pour le déplacer par rapport au corps de base (54), et il est prévu des moyens de commande pour piloter les moyens d'entraînement.

7. Système de production selon la revendication 6,
**caractérisé en ce qu'**en vue d'un pilotage automatique des moyens d'entraînement, les moyens de commande sont réalisés et conçus de telle sorte que le support (56) est déplacé par rapport au rayonnage de prélèvement en partant d'une position réelle vers une position de consigne, lorsque l'AGV (10, 50) est disposé de manière fixe devant un rayonnage de prélèvement (8).

8. Système de production selon l'une des revendications 2 à 6,
**caractérisé en ce que** les moyens d'entraînement comprennent au moins un entraînement par moteur électrique (78), en particulier un entraînement linéaire.

9. Système de production selon la revendication 8,
**caractérisé en ce que** l'entraînement (78) comporte un entraîneur à broche filetée (86, 88) qui est en liaison active avec un moteur électrique.

10. Système de production selon l'une des revendications précédentes,
**caractérisé en ce qu'**il est prévu des moyens de détermination de la position réelle de l'AGV (10, 50) par rapport au rayonnage de prélèvement (8), qui sont en liaison de transmission de données avec les moyens de commande des moyens d'entraînement.

11. Système de production selon la revendication 10,
**caractérisé en ce que** les moyens de détermination de la position réelle de l'AGV (10, 50) comportent des moyens capteurs pour balayer au moins une caractéristique sur le rayonnage de prélèvement (8).

12. Système de production selon la revendication 11,
**caractérisé en ce que** les moyens capteurs comprennent des moyens capteurs optiques.

13. Système de production selon la revendication 12,
**caractérisé en ce que** les moyens capteurs optiques comprennent au moins une caméra.

14. Système de production selon la revendication 12 ou 13,
**caractérisé en ce que** les moyens capteurs optiques comprennent au moins un laser (90) qui est réalisé pour balayer une caractéristique optique sur le rayonnage de prélèvement.

15. Système de production selon l'une des revendications précédentes,
**caractérisé en ce que** le dispositif de commande de déplacement de l'AGV (10, 50) est programmée de telle sorte que la direction de déplacement de l'AGV est transversale à la direction de distribution, de telle sorte que l'AGV se déplace transversalement par rapport à la direction de distribution (70) lorsqu'il s'approche du rayonnage de prélèvement (8) correspondant.

16. Système de production selon la revendication 15,
**caractérisé en ce que** les moyens capteurs sont réalisés et programmés pour détecter au moins une caractéristique, caractérisant la position de consigne, sur le rayonnage de prélèvement (8) pendant le déplacement transversal.

17. Système de production selon l'une des revendications 10 à 16,
**caractérisé en ce que** les moyens de détermination de la position réelle de l'AGV (10, 50) par rapport au rayonnage de prélèvement sont en liaison de transmission de données avec le dispositif de commande de déplacement de l'AGV.

18. Système de production selon l'une des revendications précédentes,
**caractérisé en ce qu'**au moins un AGV (10, 50) est constitué par un chariot élévateur sans conducteur portant le rayonnage de transport (52).
